# EUROPÄISCHE PATENTSCHRIFT

(11) **EP 4 522 960 B1**
(45) Veröffentlichungstag und Bekanntmachung des Hinweises auf die Patenterteilung: **25.02.2026**
(21) Anmeldenummer: 23725969.2
(22) Anmeldetag: 08.05.2023
(51) Int. Cl.: G01L 5/00, G01D 21/00, G01D 11/02, F16C 19/22, F16C 19/26, F16C 19/36, F16C 33/34, F16C 33/46, F16C 41/00

(54) **WÄLZLAGER MIT MESSROLLE**
ROLLING BEARING WITH MEASURING ROLLER
PALIER À ROULEMENT AVEC ROULEAU DE MESURE

(30) Priorität: 10.05.2022 DE 102022204576; 10.05.2022 BE 202205356
(43) Veröffentlichungstag der Anmeldung: 19.03.2025
(73) Patentinhaber: thyssenkrupp rothe erde Germany GmbH, 44137 Dortmund (DE); thyssenkrupp AG, 45143 Essen (DE)
(72) Erfinder: ELFERT, Gunther, 59597 Erwitte (DE)
(74) Vertreter: thyssenkrupp Intellectual Property GmbH
(86) Internationale Anmeldenummer: PCT/EP2023/062103
(87) Internationale Veröffentlichungsnummer: WO 2023/217691

(56) Entgegenhaltungen:
- DE-A1- 102016 116 118
- US-B1- 6 535 135

## Beschreibung

### Stand der Technik

Die Erfindung betrifft ein Wälzlager mit einem als Messrolle ausgebildeten Wälzkörper nach dem Oberbegriff des Anspruchs 1.

Aus dem Stand der Technik sind Wälzlager, insbesondere Großwälzlager, mit mindestens einem als Messrolle ausgebildeten Wälzkörper bekannt. Die Messrolle dient dazu, während des Betriebs des Wälzlagers Daten in dem Lagerinnenraum aufzunehmen und zu speichern oder drahtlos nach außen zu übertragen. Auf diese Weise können beispielsweise Daten zur momentanen Belastung des Wälzlagers, Temperatur, Rotationsgeschwindigkeit, Position und/oder Schlupf der Messrolle erfasst werden. Zur Erfüllung ihrer Aufgaben benötigt die Messrolle elektrische Energie. Die Energie kann beispielsweise mit Hilfe einer Batterie in der Messrolle gespeichert sein, wobei die Kapazität der Batterie allerdings die Funktionsfähigkeit der Messrolle zeitlich begrenzt.

Um diesen Nachteil zu beheben, wurden im Stand der Technik bereits autonome Energieversorgungen vorgeschlagen, die elektrische Energie aus der Relativbewegung zwischen der Messrolle und einer die Messrolle umgebenden Käfigtasche zu erzeugen.

So ist beispielsweise aus DE 698 28 236 T2 ein Wälzlager mit einem Wälzkörper bekannt, der ein zylindrisches Loch aufweist, in dem eine elektrische Energieerzeugungseinrichtung angeordnet ist. Die elektrische Energieerzeugungseinrichtung ist dabei ein dynamometrischer Generator oder eine Hertzsche Schleife und ist über ein elastisches Kupplungsorgan mit dem außerhalb des Wälzkörpers befindlichen Wälzkörper-Käfig gekuppelt. Der Generator in der Wälzkörperbohrung wird durch ein Untersetzungsgetriebe angetrieben, das mit dem elastischen Kupplungsorgan verbunden ist. Nachteilig ist, dass der Wälzkörper eine Vielzahl von beweglichen Teilen enthält und eine mechanische Verbindung mit dem Käfig notwendig ist, um den Generator anzutreiben. Beides ist potentiell fehleranfällig, wobei eine Zerstörung der elastischen Kupplung sogar zu Fremdkörpern im Laufbahnsystem des Lagers führt, die die Funktion des gesamten Wälzlagers beeinträchtigen können.

DE 11 2013 007 412 T5 beschreibt daher eine Sensorrolle, deren Energieerzeugung auf einer berührungslosen, induktiven Wechselwirkung zwischen Sensorrolle und Käfig beruht. Die Sensorrolle weist eine Bohrung auf, die eine Sensoreinheit und einen ersten Abschnitt einer Generatorbaugruppe aufnimmt. Ein zweiter Abschnitt der Generatorbaugruppe wird vom Käfig bereitgestellt, wobei wenigstens ein Magnetkreis als Funktion der relativen Rotation zwischen dem Käfig und der Sensorrolle geöffnet und geschlossen wird. Der zweite Abschnitt der Generatorbaugruppe umfasst zwei Permanentmagnete, die durch eine Metallplatte mit hoher magnetischer Durchlässigkeit verbunden sind. Die Magnetisierungsrichtungen der Permanentmagnete sind identisch und bezogen auf die Rotationsachse der Sensorrolle axial ausgerichtet. Einschränkungen sind durch den maximalen Miniaturisierungsgrad für die in der Bohrung der Laufrolle unterzubringende Generatorbaugruppe sowie die Leistungsmenge, die bei einer gewissen Rotationsgeschwindigkeit zu generieren ist, gegeben.

DE 10 2016 116 118 A1 beschreibt eine Messrolle mit einem Mikrogenerator, der eine erhöhte Leistungsausbeute aufweist. Dazu ist eine Mehrzahl von auf einer Kreisbahn angeordneten Spulen vorgesehen, die auf der Messrolle radial zwischen einer zentralen Bohrung der Messrolle und deren Außenmantel angeordnet sind. An der Stelle der Messrolle umfasst der Käfig beispielsweise vier Magnete, die es dem Mikrogenerator ermöglichen einen Strom zu induzieren.

Diese aus dem Stand der Technik bekannten Lösungen haben sich jedoch als nicht besonders zuverlässig erwiesen. So wurde festgestellt, dass die bekannten induktiven Generatoren insbesondere in Situationen erhöhter Belastung des Wälzlagers durch Kippmomente oftmals nur noch eine stark verringerte Menge an elektrischer Energie bereitstellen.

### Offenbarung der Erfindung

Aufgabe der Erfindung ist es, ein Wälzlager mit einer Messrolle anzugeben, das eine besonders zuverlässige Energieversorgung der Messrolle in allen Belastungssituationen des Wälzlagers sicherstellt, die ohne bewegliche Teile in der Messrolle auskommt.

Diese Aufgabe wird gelöst durch ein Wälzlager mit den Merkmalen des Anspruchs 1.

Hierdurch wird ein Wälzlager geschaffen, welches einen ersten Lagerring, einen gegenüber dem ersten Lagerring verdrehbar angeordneten zweiten Lagerring und mindestens eine Reihe von achssymmetrischen Wälzkörpern umfasst. Die achssymmetrischen Wälzkörper weisen mindestens eine Stirnseite auf. Die Wälzkörper der Wälzkörperreihe sind zur Übertragung von Kräften entlang einer Lastrichtung zwischen den Lagerringen abrollbar angeordnet und von einem Käfig zueinander beabstandet in Käfigtaschen aufgenommen. An der Stirnseite eines als Messrolle ausgebildeten Wälzkörpers ist ein Generatorpolschuh angeordnet, der eine Mehrzahl von auf einer zur Wälzkörperachse koaxialen Kreisbahn angeordneten Spulen trägt. Der Generatorpolschuh wirkt mit einem in der zugeordneten Käfigtasche gegenüberliegend befestigten Magnethalter zusammen, der eine Mehrzahl von Magneten trägt. Die Magnete sind streifenförmig ausgebildet, erstrecken sich in der Lastrichtung und überdecken die Kreisbahn abschnittsweise.

Der Erfindung liegt die Erkenntnis zugrunde, dass Belastungssituationen des Wälzlagers zu Verformungen der Wälzlagerringe im Betrieb führen können, die die Energiegewinnung der Messrolle negativ beeinflussen. Insbesondere bei über den Umfang der Wälzlagerringe ungleichförmigen Belastungen, wie beispielsweise Kippmomenten, kann es zu lokalen Auslenkungen von Ringabschnitten in der Lastrichtung kommen, die von den Wälzkörpern zwischen den Lagerringen übertragen werden. Der in das Laufbahnsystem mit einem gewissen Spiel eingelegte Käfig erfährt dagegen im Vergleich zu den Lagerringen nur eine geringere Verformung, so dass es zu einer Relativbewegung zwischen Wälzkörpern und Käfig in Lastrichtung kommt. Die Relativbewegung reduziert die Energieausbeute der aus dem Stand der Technik bekannten induktiven Generatoren, weil die Spulen ihre Ausrichtung gegenüber den Magneten verlieren und der durch die Spulen tretende magnetische Fluss entsprechend stark abnimmt. Bereits eine Verschiebung um wenige Millimeter kann bei den aus dem Stand der Technik bekannten Messrollen zu einem Zusammenbruch der Energieversorgung führen.

Erfindungsgemäß wird durch die streifenförmige Erstreckung der Magneten in Lastrichtung die Relativbewegung zwischen Käfig und Wälzkörper kompensiert. Die von dem Generatorpolschuh getragenen Spulen bleiben daher auch unter einer Relativbewegung zwischen Käfig und Messrolle dem jeweiligen Magneten gegenüberliegend angeordnet, so dass der durch die Spulen tretende magnetische Fluss auch unter der Relativbewegung erhalten bleibt.

In bevorzugten Ausführungsformen sind entlang der Kreisbahn benachbart zueinander angeordnete Magnete in der Richtung der Wälzkörperachse entgegengesetzt polarisiert. Durch den Wechsel der Polarisierungsrichtung zwischen allen benachbarten Magneten wird die Energieausbeute erhöht, weil es bei der Drehung der Messrolle in jeder Spule, die aus dem Feld eines Magneten in das Feld eines entlang der Kreisbahn benachbarten Magneten verlagert wird, zu einer induzierten Spannung kommt. Denkbar sind jedoch auch Konfigurationen bei denen die Polarisation der Magnete in größeren Abständen wechselt, also beispielsweise jeweils zwei gleich polarisierte Magnete entlang der Kreisbahn aufeinander folgen.

In weiteren bevorzugten Ausführungsformen der Erfindung sind die von dem Generatorpolschuh getragenen Spulen in Reihe geschaltet, wobei zueinander benachbarte Spulen jeweils einen entgegengesetzten Wicklungssinn aufweisen. Die Reihenschaltung der Spulen erlaubt eine einfache Verschaltung des Generators, wobei der jeweils wechselnde Wicklungssinn der Spulen eine gleichgerichtete Addition der induzierten Spannungsimpulse sicherstellt.

Es ist ferner bevorzugt, dass die streifenförmigen Magnete quer zur Lastrichtung eine Breite aufweisen, die mindestens so groß ist, wie ein Innendurchmesser der Spulen. Der Innendurchmesser der Spulen definiert den für den magnetischen Fluss sensitiven Bereich des Generatorpolschuhs. Um eine möglichst große Energieausbeute sicherzustellen, ist es vorteilhaft wenn dieser Bereich zumindest zeitweise vollständig durch die Breite der streifenförmigen Magnete abgedeckt ist.

Es ist vorteilhaft, wenn eine Mehrheit der streifenförmigen Magnete in Lastrichtung eine Länge aufweist, die mindestens doppelt so groß ist, wie ein Außendurchmesser der Spulen. Durch eine derartige Erstreckung der Magnete ist eine hinreichende Kompensation von Relativbewegungen zwischen Käfig und Wälzkörper in Lastrichtung sichergestellt. Insbesondere hat es sich herausgestellt, dass es genügt, wenn eine Mehrheit der Magnete eine abschnittsweise Abdeckung der Kreisbahn auch unter Belastungen gewährleistet. Wenn aus fertigungstechnischen Gründen nicht alle Magnete gleich lang ausgebildet werden können, hat das auf die Stromversorgung der Messrolle in der Regel nur eine untergeordnete Auswirkung.

Bevorzugt entspricht die Anzahl der Spulen der Anzahl an streifenförmigen Magneten. Dadurch ist jeder Spule während der Bewegung auf der Kreisbahn zu jedem Zeitpunkt genau ein Magnet zugeordnet, wodurch die Energieausbeute weiter erhöht wird. Bevorzugt sind mindestens sechs Spulen auf der Kreisbahn angeordnet.

Der Magnethalter ist vorzugsweise aus einem Material mit einer magnetischen Permeabilität kleiner als 2, bevorzugt kleiner als 1,5 und besonders bevorzugt kleiner 1,1 gefertigt. Die magnetische Permeabilität des Materials wird bei der üblichen Referenzfeldstärke des magnetischen Feldes von 8.000 A/m (= ca. 100 Oe) bestimmt. Es hat sich herausgestellt, dass Materialien mit einer höheren Permeabilität zu einem zumindest teilweisen Kurzschluss der Magnetfeldlinien innerhalb des Magnethalters führen. Dieser Teil des von dem Magneten bereitgestellten magnetischen Flusses steht dann nicht mehr für die induktive Energieerzeugung zur Verfügung und führt zu einer spürbaren Verringerung der Energieausbeute. Je geringer die Permeabilität des Materials des Magnethalters ist, desto größer ist der für die Energieerzeugung nutzbare Anteil des magnetischen Flusses der Magneten, wodurch die Effizienz der Energieerzeugung gesteigert wird.

Vorzugsweise ist der Magnethalter aus einem austenitischen Stahl oder einer Bronze hergestellt. Austenitische Stähle weisen aufgrund ihrer Gefügestruktur im Vergleich zu Ferrit- oder Martensit-Stählen eine sehr geringe magnetische Permeabilität nahe 1 auf. Austenitische Stähle und Bronzen weisen somit eine Kombination der vorteilhaften Eigenschaften einer geringen magnetischen Permeabilität und einer hohen mechanischen Belastbarkeit auf und sind daher auch über lange Standzeiten geeignet, die mechanischen Belastungen am Wälzkörperkäfig aufzunehmen. Grundsätzlich denkbar sind jedoch auch Magnethalter aus anderen Materialien, beispielsweise aus hochfesten Kunststoffen wie PEEK.

In bevorzugten Ausführungsformen ist der Magnethalter mit dem Käfig verschweißt. Das Verschweißen liefert eine sichere Verbindung des Magnethalters mit dem Käfig ohne Einsatz zusätzlicher Befestigungsmittel. Auf diese Weise ist über lange Standzeiten sichergestellt, dass der Magnethalter in der Käfigtasche verbleibt und weder Befestigungsmittel noch der Magnethalter selbst sich lösen und in das Laufbahnsystem des Wälzlagers gelangen können. Es sind jedoch auch andere Befestigungsarten, wie beispielsweise Verschrauben oder Verkleben, für den Magnethalter denkbar.

Vorzugsweise sind die streifenförmigen Magnete durch zueinander parallele Stege voneinander getrennt in dem Magnethalter gehalten. Die Stege tragen ebenfalls zu einer Flusstrennung zwischen benachbarten Magneten bei und steigern dadurch die Energieausbeute.

Schließlich ist es vorteilhaft, wenn die streifenförmigen Magneten gleich breit oder zur Vergleichmäßigung der Bogenlängen der jeweils überdeckten Abschnitte der Kreisbahn unterschiedlich breit ausgebildet sind. Gleichbreite Magnete erlauben die Verwendung von Standardbauteilen, wie beispielsweise rechteckigen Magneten. Eine Vergleichmäßigung der abgedeckten Bogenlängen durch unterschiedlich breite Magnete hat dagegen den Vorteil einer phasensynchronen Addition der in den Spulen induzierten Spannungsimpulse, welche zu einer höheren Energieausbeute beiträgt.

Weitere vorteilhafte Ausführungsformen sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

### Kurzbeschreibung der Zeichnungen

- Fig. 1: zeigt schematisch ein Ausführungsbeispiel eines erfindungsgemäßen Wälzlagers mit einem als Messrolle ausgebildeten Wälzkörper in einer teilweise geschnittenen Detaildarstellung,
- Fig. 2: zeigt schematisch eine perspektivische Darstellung des als Messrolle ausgebildeten Wälzkörpers gemäß Fig. 1 aufgenommen in einer Käfigtasche des Wälzkörperkäfigs mit einem Magnethalter,
- Fig. 3A: zeigt schematisch eine perspektivische Darstellung der Anordnung von Messrolle und Magnethalter gemäß Fig. 2, wobei der Magnethalter nur teilweise mit streifenförmigen Magneten besetzt ist,
- Fig. 3B und 3C: zeigen schematisch die Anordnung gemäß Fig. 3A ohne Magnete in einer unbelasteten und einer belasteten Situation des Wälzlagers, und
- Fig. 4: zeigt schematisch eine Anordnung von einer Messrolle und einem Magnethalter gemäß einem zweiten Ausführungsbeispiel in einer stirnseitigen Draufsicht.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

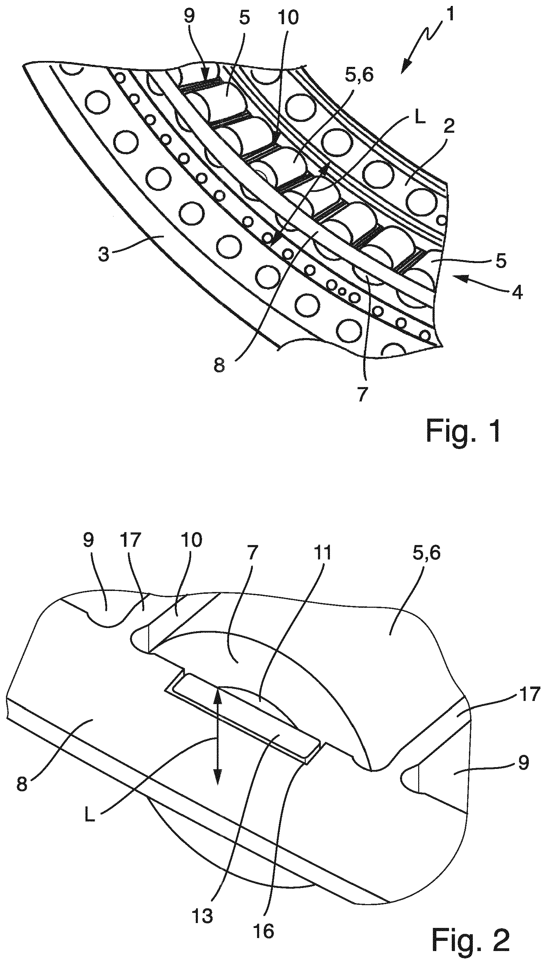

In **Fig.** 1 ist eine teilweise geschnittene Detaildarstellung eines erfindungsgemäßen Wälzlagers 1 gezeigt. Das Wälzlager 1 umfasst einen ersten Lagerring 2, einen gegenüber dem ersten Lagerring 2 verdrehbar angeordneten zweiten Lagerring 3 und eine Reihe 4 von achssymmetrischen Wälzkörpern 5.

In dem dargestellten Ausführungsbeispiel sind die Wälzkörper 5 Zylinderrollen und weisen zwei Stirnseiten 7 auf. Die Wälzkörper 5 der Wälzkörperreihe 4 sind zur Übertragung von Kräften entlang einer Lastrichtung L zwischen den Lagerringen 2, 3 abrollbar angeordnet. Die Wälzkörper 5 sind von einem Käfig 8 zueinander beabstandet in Käfigtaschen 9, 10 aufgenommen.

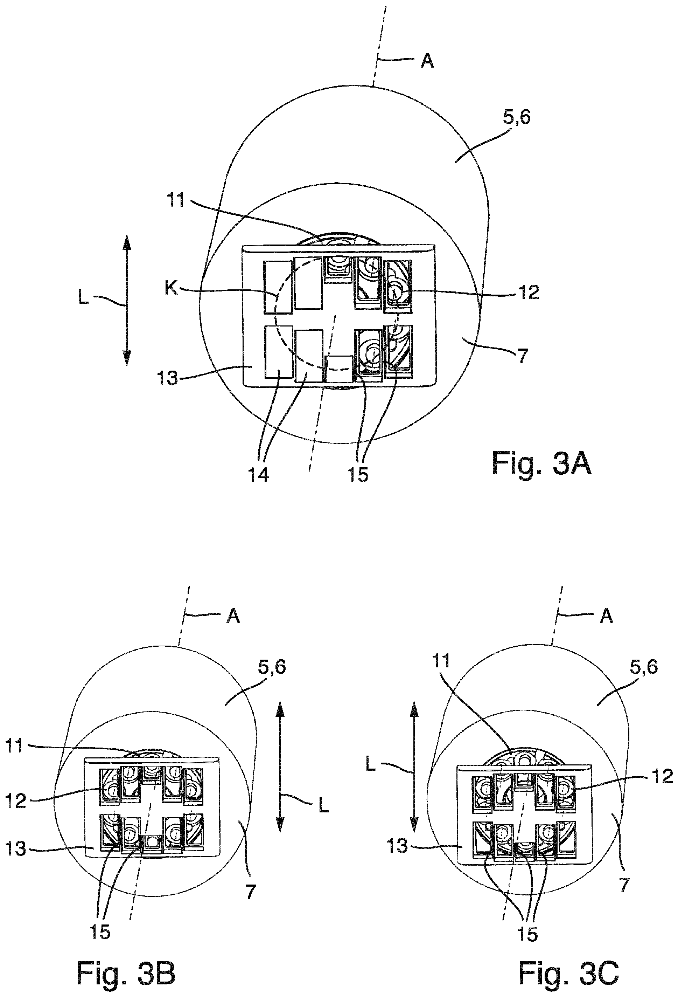

An einer der Stirnseiten 7 eines als Messrolle 6 ausgebildeten Wälzkörpers 5 ist ein Generatorpolschuh 11 angeordnet, der eine Mehrzahl von auf einer zur Wälzkörperachse A koaxialen Kreisbahn K angeordneten Spulen 12 trägt (vgl. Fig. 3A). Der Generatorpolschuh 11 wirkt mit einem in der zugeordneten Käfigtasche 10 gegenüberliegend befestigten Magnethalter 13 zusammen, der eine Mehrzahl von Magneten 14 trägt. Die Magnete 14 sind streifenförmig ausgebildet. Die streifenförmigen Magnete 14 erstrecken sich in der Lastrichtung L und überdecken die Kreisbahn K jeweils abschnittsweise.

Der Magnethalter 13 mit den streifenförmigen Magneten 14 wirkt mit den von dem Generatorpolschuh 11 getragenen Spulen 12 unter Bildung eines induktiven Generators zusammen.

Als streifenförmige Magnete 14 werden bevorzugt Permanentmagnete, insbesondere Seltenerdmagnete, beispielsweise Neodym-Magnete eingesetzt.

**Fig. 2** zeigt eine Detaildarstellung der in der Käfigtasche 10 aufgenommenen Messrolle 6. Gegenüberliegend zur Stirnseite 7 der Messrolle 6 ist der Magnethalter 13 in der Käfigtasche 10 befestigt. Der Magnethalter 13 ist dazu vorzugsweise in einer taschenseitigen Ausnehmung 16 des Käfigs 8 eingesetzt und besonders bevorzugt darin verklebt.

In Umfangsrichtung des Wälzlagers ist die Messrolle 6 in der Käfigtasche 10 mit einem geringen Spiel zwischen zwei Trennwänden 17 des Käfigs aufgenommen. Eine relative Verschiebung des stirnseitig an der Messrolle 6 angeordneten Generatorpolschuhs 11 gegenüber dem Magnethalter 13 in Umfangsrichtung des Wälzlagers 1 wird durch diesen Formschluss wirksam verhindert. Jedoch kann abhängig von der Lastsituation des Wälzlagers eine relative Verschiebung des Generatorpolschuhs 11 gegenüber dem Magnethalter 13 in Lastrichtung L auftreten.

**Fig. 3A** zeigt die Anordnung von Messrolle 6 und Magnethalter 13 in einer perspektivischen stirnseitigen Ansicht. Der Magnethalter 13 ist nur in der linken Hälfte mit streifenförmigen Magneten 14 besetzt. In der rechten Hälfte sind der besseren Übersicht halber die streifenförmigen Magnete entfernt worden, um den Blick auf die dahinterliegenden Spulen 12 und den Generatorpolschuh 11 zu ermöglichen. Im normalen Betriebszustand des Wälzlagers 1 ist der Magnethalter 13 voll mit Magneten 14 besetzt. In den **Fig. 3B und 3C** sind zur weiteren Vereinfachung der Darstellung alle Magnete 14 entfernt.

Fig. 3A und 3B zeigen Messrolle 6 und Käfig 8 in einem lastlosen Zustand des Wälzlagers 1. Im lastlosen Zustand durchstößt die Wälzkörperachse A den Magnethalter 13 in einem zentralen Bereich zwischen den streifenförmigen Magneten 14. Im belasteten Zustand durchstößt die Wälzkörperachse A den Magnethalter 13 dagegen an einer in Lastrichtung L verschobenen, exzentrischen Position.

Wie in Fig. 3A bis 3C dargestellt, ist es von Vorteil, wenn für jede Spule 12 genau ein streifenförmiger Magnet 14 vorgesehen ist. Die Anzahl der Spulen 12 entspricht in einer solchen Konfiguration der Anzahl an streifenförmigen Magneten 14. Somit ist jede Spule 12 während der Rollbewegung der Messrolle 6 einem der Magneten 14 zugeordnet und von dessen magnetischem Feld durchflossen. Bevorzugt sind mindestens sechs Spulen 12, beispielsweise zehn Spulen 12 wie in Fig. 3A bis 3C dargestellt, auf der Kreisbahn K angeordnet sind.

Die entlang der Kreisbahn K angeordneten Magnete 14 sind bevorzugt in der Richtung der Wälzkörperachse A polarisiert. Besonders bevorzugt sind dabei jeweils benachbart zueinander angeordnete Magnete 14 entgegengesetzt polarisiert. Weiterhin ist es bevorzugt, wenn die von dem Generatorpolschuh 11 getragenen Spulen 12 in Reihe geschaltet sind, wobei zueinander benachbarte Spulen 12 jeweils einen entgegengesetzten Wicklungssinn aufweisen. In einer solchen Konfiguration verlaufen die Magnetfeldlinien jedes der Magnete 14 wälzkörperseitig durch das Innere der dem Magneten 14 momentan zugeordneten Spule 12, durch den Generatorpolschuh 11, das Innere der benachbarten Spulen 12 und die benachbarten Magnete 14 und werden auf der vom Wälzkörper 5 abgewandten Seite des Magnethalters 13 im Material des Käfigs 8 geschlossen. Bei der Bewegung der Spule 12 durch die Magnetfelder der Magnete 14 wechselt jeweils die Feldrichtung im Spuleninneren, wodurch phasenrichtige Spannungsimpulse in allen Spulen 12 erzeugt werden.

Bevorzugt ist der Magnethalter 13 aus einem Material mit einer magnetischen Permeabilität kleiner als 2, insbesondere kleiner als 1,5 und besonders bevorzugt kleiner 1,1 gefertigt, um einen Kurzschluss der Magnetfeldlinien im Magnethalter 13 zu vermeiden. Der Magnethalter 13 kann beispielsweise aus einem austenitischen Stahl oder einer Bronze hergestellt sein und/oder mit dem Käfig 8 verschweißt sein.

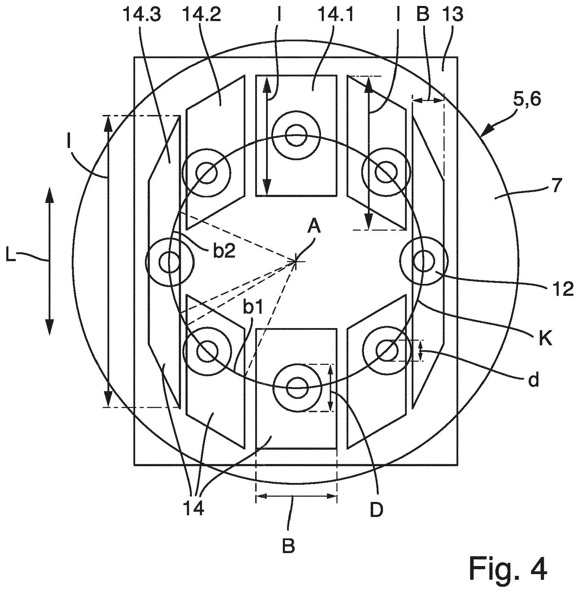

In **Fig. 4** ist ein zweites Ausführungsbeispiel einer erfindungsgemäßen Anordnung von Messrolle 6 und Magnethalter 13 gezeigt, in der weitere geometrische Größen bezeichnet sind.

Für eine möglichst vollständige Durchsetzung der Spulen 12 mit dem magnetischen Feld der streifenförmigen Magnete 14 weisen die streifenförmigen Magnete 14 quer zur Lastrichtung L bevorzugt eine Breite B auf, die mindestens so groß ist, wie ein Innendurchmesser d der Spulen 12. Dann ist sichergestellt, dass die Spulen 12 während der Bewegung auf der Kreisbahn K die geometrisch maximal mögliche Überdeckung mit den Magneten 14 erreichen, wodurch die Energieausbeute erhöht wird.

Ferner ist es vorteilhaft, wenn eine Mehrheit der streifenförmigen Magnete 14 in Lastrichtung L eine Länge l aufweist, die mindestens doppelt so groß ist, wie ein Außendurchmesser D der Spulen 12. Die Länge l der Magnete 14 bestimmt die maximale Toleranz des Generators gegenüber Relativverschiebungen zwischen Messrolle 6 und Magnethalter 13 in Lastrichtung L. Für eine ausreichende Toleranz genügt es, wenn die Mehrheit der Spulen 12 auch unter Last gegenüber einem der Magnete 14 angeordnet bleibt. Insbesondere weist eine Mehrheit der Magnete 14 bevorzugt eine Länge l von mindestens 2 cm, besonders bevorzugt von mindestens 3 cm auf.

Die vorstehenden Ausführungen gelten auch für das in Fig. 3A bis 3C dargestellte Ausführungsbeispiel, auch wenn dort die Breite und Länge der Magnete 14 nicht gesondert bezeichnet sind. Da die Höhe des Magnethalters in Lastrichtung L durch die Höhe des Käfigs 8 begrenzt ist (vgl. Fig. 2), kann es erforderlich sein, insbesondere die mittleren Magnete 14 mit einer geringeren Länge l auszubilden, um die maximale Gesamthöhe des Magnethalters 13 nicht zu überschreiten (vgl. Fig. 3A bis 3C). Je nach Bauart des Wälzlagers kann auch eine asymmetrische Anordnung von Magneten erforderlich sein, um die durch die Abmessungen des Käfigs vorgegebenen Maße des Magnethalters einhalten zu können (nicht dargestellt).

Im Unterschied zu dem Ausführungsbeispiel gemäß Fig. 3A bis 3C sind in dem Ausführungsbeispiel gemäß Fig. 4 die streifenförmigen Magnete 14 nicht gleich breit, sondern zur Vergleichmäßigung der Bogenlängen b1, b2 der jeweils überdeckten Abschnitte der Kreisbahn K unterschiedlich breit ausgebildet. Durch eine Vergleichmäßigung der Bogenlängen b1, b2 kann der Wechsel der Spulen 12 zwischen benachbarten Magneten 14 während der Rollbewegung besser synchronisiert werden, was eine phasensynchrone Addition der induzierten Spannungsimpulse erlaubt.

Wie im Ausführungsbeispiel nach Fig. 4 dargestellt, können die streifenförmigen Magnete 14 insbesondere rechteckig, parallelogrammförmig oder trapezförmig ausgebildet sein.

Ein weiterer Unterschied zum ersten Ausführungsbespiel besteht darin, dass im Ausführungsbeispiel gemäß Fig. 4 nur acht Spulen 12 auf der Kreisbahn K angeordnet sind.

Im Übrigen gelten die Ausführungen zu dem im Fig. 1 bis 3 dargestellten Ausführungsbeispiel für das Ausführungsbeispiel gemäß Fig. 4 entsprechend.

### Bezugszeichenliste

- 1: Wälzlager
- 2: erster Lagerring
- 3: zweiter Lagerring
- 4: Wälzkörperreihe
- 5: Wälzkörper
- 6: Messrolle
- 7: Stirnseite
- 8: Käfig
- 9, 10: Käfigtaschen
- 11: Generatorpolschuh
- 12: Spule
- 13: Magnethalter
- 14: Magnet
- 15: Steg
- 16: Ausnehmung
- 17: Trennwände

- A: Wälzkörperachse
- b1, b2: Bogenlängen
- B: Breite der streifenförmigen Magnete
- d: Innendurchmesser der Spulen
- D: Außendurchmesser der Spulen
- K: Kreisbahn
- I: Länge der streifenförmigen Magnete
- L: Lastrichtung

## Patentansprüche

1. Wälzlager umfassend einen ersten Lagerring (2), einen gegenüber dem ersten Lagerring (2) verdrehbar angeordneten zweiten Lagerring (3) und mindestens eine Reihe (4) von achssymmetrischen Wälzkörpern (5) mit mindestens einer Stirnseite (7), wobei die Wälzkörper (5) der Wälzkörperreihe (4) zur Übertragung von Kräften entlang einer Lastrichtung (L) zwischen den Lagerringen (2, 3) abrollbar angeordnet und von einem Käfig (8) zueinander beabstandet in Käfigtaschen (9, 10) aufgenommen sind, wobei an der Stirnseite (7) eines als Messrolle (6) ausgebildeten Wälzkörpers (5) ein Generatorpolschuh (11) angeordnet ist, der eine Mehrzahl von auf einer zur Wälzkörperachse (A) koaxialen Kreisbahn (K) angeordneten Spulen (12) trägt und mit einem in der zugeordneten Käfigtasche (10) gegenüberliegend befestigten Magnethalter (13) zusammenwirkt, der eine Mehrzahl von Magneten (14) trägt, **dadurch gekennzeichnet, dass** die Magnete (14) streifenförmig ausgebildet sind, wobei sich die streifenförmigen Magnete (14) in der Lastrichtung (L) erstrecken und die Kreisbahn (K) abschnittsweise überdecken.

2. Wälzlager nach Anspruch 1, **dadurch gekennzeichnet, dass** entlang der Kreisbahn (K) benachbart zueinander angeordnete Magnete (14) in der Richtung der Wälzkörperachse (A) entgegengesetzt polarisiert sind.

3. Wälzlager nach Anspruch 1 oder 2, **dadurch gekennzeichnet, dass** die von dem Generatorpolschuh (11) getragenen Spulen (12) in Reihe geschaltet sind, wobei zueinander benachbarte Spulen (12) jeweils einen entgegengesetzten Wicklungssinn aufweisen.

4. Wälzlager nach einem der Ansprüche 1 bis 3, **dadurch gekennzeichnet, dass** die streifenförmigen Magnete (14) quer zur Lastrichtung (L) eine Breite (B) aufweisen, die mindestens so groß ist, wie ein Innendurchmesser (d) der Spulen (12).

5. Wälzlager nach einem der Ansprüche 1 bis **4, dadurch gekennzeichnet, dass** eine Mehrheit der streifenförmigen Magnete (14) in Lastrichtung (L) eine Länge (I) aufweist, die mindestens doppelt so groß ist, wie ein Außendurchmesser (D) der Spulen (12).

6. Wälzlager nach einem der Ansprüche 1 bis 5, **dadurch gekennzeichnet, dass** die Anzahl der Spulen (12) der Anzahl an streifenförmigen Magneten (14) entspricht.

7. Wälzlager nach einem der Ansprüche 1 bis 6, **dadurch gekennzeichnet, dass** mindestens sechs Spulen (12) auf der Kreisbahn (K) angeordnet sind.

8. Wälzlager nach einem der Ansprüche 1 bis 7, **dadurch gekennzeichnet, dass** der Magnethalter (13) aus einem Material mit einer magnetischen Permeabilität kleiner als 2, bevorzugt kleiner als 1,5 und besonders bevorzugt kleiner 1,1 gefertigt ist.

9. Wälzlager nach einem der Ansprüche 1 bis 8, **dadurch gekennzeichnet, dass** der Magnethalter (13) aus einem austenitischen Stahl oder einer Bronze hergestellt ist.

10. Wälzlager nach einem der Ansprüche 1 bis 9, **dadurch gekennzeichnet, dass** der Magnethalter (13) mit dem Käfig (8) verschweißt ist.

11. Wälzlager nach einem der Ansprüche 1 bis 10, **dadurch gekennzeichnet, dass** die streifenförmigen Magnete (14) durch zueinander parallele Stege (15) voneinander getrennt in dem Magnethalter (13) gehalten sind.

12. Wälzlager nach einem der Ansprüche 1 bis 11, **dadurch gekennzeichnet, dass** die streifenförmigen Magnete (14) gleich breit oder zur Vergleichmäßigung der Bogenlängen (b1, b2) der jeweils überdeckten Abschnitte der Kreisbahn (K) unterschiedlich breit ausgebildet sind.

## Claims

1. Rolling bearing comprising a first bearing ring (2), a second bearing ring (3) arranged so as to be rotatable relative to the first bearing ring (2), and at least one row (4) of axially symmetrical rolling elements (5) with at least one end face (7), wherein the rolling elements (5) of the row of rolling elements (4) are arranged so as to be rollable for transmitting forces along a load direction (L) between the bearing rings (2, 3) and are held in cage pockets (9, 10) at a distance from one another by a cage (8), wherein a generator pole shoe (11) is arranged on the end face (7) of a rolling element (5) designed as a measuring roller (6) which generator pole shoe (11) carries a plurality of coils (12) arranged on a circular path (K) coaxial with the rolling element axis (A) and interacts with a magnet holder (13) fixed opposite in the associated cage pocket (10) and carries a plurality of magnets (14), **characterised in that** the magnets (14) are strip-shaped, wherein the strip-shaped magnets (14) extend in the load direction (L) and cover the circular path (K) in sections.

2. Rolling bearing according to claim 1, **characterised in that** magnets (14) arranged adjacent to one another along the circular path (K) are polarised in opposite directions in the direction of the rolling element axis (A).

3. Rolling bearing according to claim 1 or 2, **characterised in that** the coils (12) carried by the generator pole shoe (11) are connected in series, wherein adjacent coils (12) each have an opposite winding direction.

4. Rolling bearing according to one of claims 1 to 3, **characterised in that** the strip-shaped magnets (14) have a width (B) transverse to the load direction (L) which is at least as large as an inner diameter (d) of the coils (12).

5. Rolling bearing according to one of claims 1 to 4, **characterised in that** a majority of the strip-shaped magnets (14) have a length (l) in the load direction (L) which is at least twice as large as an outer diameter (D) of the coils (12).

6. Rolling bearing according to one of claims 1 to 5, **characterised in that** the number of coils (12) corresponds to the number of strip-shaped magnets (14).

7. Rolling bearing according to one of claims 1 to 6, **characterised in that** at least six coils (12) are arranged on the circular path (K).

8. Rolling bearing according to one of claims 1 to 7, **characterised in that** the magnet holder (13) is made of a material with a magnetic permeability of less than 2, preferably less than 1.5 and particularly preferably less than 1.1.

9. Rolling bearing according to one of claims 1 to 8, **characterised in that** the magnet holder (13) is made of austenitic steel or bronze.

10. Rolling bearing according to one of claims 1 to 9, **characterised in that** the magnet holder (13) is welded to the cage (8).

11. Rolling bearing according to one of claims 1 to 10, **characterised in that** the strip-shaped magnets (14) are held in the magnet holder (13) separated from one another by webs (15) that are parallel to one another.

12. Rolling bearing according to one of claims 1 to 11, **characterised in that** the strip-shaped magnets (14) are of equal width or of different widths in order to equalise the arc lengths (b1, b2) of the respective covered sections of the circular path (K).

## Revendications

1. Roulement comprenant une première bague de roulement (2), une deuxième bague de roulement (3) disposée de manière à pouvoir tourner par rapport à la première bague de roulement (2) et au moins une rangée (4) d'éléments roulants (5) symétriques par rapport à l'axe, avec au moins une face frontale (7), les éléments roulants (5) de la rangée d'éléments roulants (4) étant disposés de manière à pouvoir rouler pour transmettre des forces entre les bagues de roulement (2, 3) dans une direction de charge (L) et étant maintenus à distance les uns des autres dans des poches de cage (9, 10) par une cage (8), une pièce polaire de générateur (11) étant disposée sur la face frontale (7) d'un corps roulant (5) conçu comme un rouleau de mesure (6), ladite pièce polaire de générateur (11) portant une pluralité de bobines (12) disposées sur une trajectoire circulaire (K) coaxiale à l'axe (A) dudit corps roulant et coopérant avec un porte-aimants (13) fixé en face dans la poche de cage (10) associée, ledit porte-aimants (13) portant une pluralité d'aimants (14), **caractérisé en ce que** les aimants (14) sont réalisés en forme de bandes, les aimants en forme de bandes (14) s'étendant dans la direction de charge (L) et recouvrant la trajectoire circulaire (K) par sections.

2. Roulement selon la revendication 1, **caractérisé en ce que** les aimants (14) disposés de manière adjacente les uns aux autres le long de la trajectoire circulaire (K) sont polarisés de manière opposée dans la direction de l'axe (A) des corps roulants.

3. Roulement selon la revendication 1 ou 2, **caractérisé en ce que** les bobines (12) portées par la pièce polaire du générateur (11) sont montées en série, les bobines (12) adjacentes les unes aux autres présentant chacune un sens d'enroulement opposé.

4. Roulement selon l'une des revendications 1 à 3, **caractérisé en ce que** les aimants en forme de bandes (14) présentent, transversalement à la direction de charge (L), une largeur (B) qui est au moins aussi grande que le diamètre intérieur (d) des bobines (12).

5. Roulement selon l'une des revendications 1 à 4, **caractérisé en ce qu'**une majorité des aimants en forme de bandes (14) présente, dans la direction de la charge (L), une longueur (l) qui est au moins deux fois plus grande que le diamètre extérieur (D) des bobines (12).

6. Roulement selon l'une des revendications 1 à 5, **caractérisé en ce que** le nombre de bobines (12) correspond au nombre d'aimants en forme de bandes (14).

7. Roulement selon l'une des revendications 1 à 6, **caractérisé en ce qu'**au moins six bobines (12) sont disposées sur la trajectoire circulaire (K).

8. Roulement selon l'une des revendications 1 à 7, **caractérisé en ce que** le porte-aimants (13) est fabriqué dans un matériau ayant une perméabilité magnétique inférieure à 2, de préférence inférieure à 1,5 et de manière particulièrement préférée inférieure à 1,1.

9. Roulement selon l'une des revendications 1 à 8, **caractérisé en ce que** le porte-aimants (13) est fabriqué en acier austénitique ou en bronze.

10. Roulement selon l'une des revendications 1 à 9, **caractérisé en ce que** le porte-aimants (13) est soudé à la cage (8).

11. Roulement selon l'une des revendications 1 à 10, **caractérisé en ce que** les aimants en forme de bandes (14) sont maintenus dans le porte-aimants (13) séparés les uns des autres par des nervures (15) parallèles entre elles.

12. Roulement selon l'une des revendications 1 à 11, **caractérisé en ce que** les aimants en forme de bandes (14) ont une largeur identique ou différente afin d'uniformiser les longueurs d'arc (b1, b2) des sections respectivement recouvertes de la trajectoire circulaire (K).
